## Europäisches Patentamt
## European Patent Office
## Office européen des brevets

(11) Veröffentlichungsnummer: **0 017 783**
**B1**

(12) **EUROPÄISCHE PATENTSCHRIFT**

(45) Veröffentlichungstag der Patentschrift:
**25.05.83**

(21) Anmeldenummer: **80101452.3**

(22) Anmeldetag: **20.03.80**

(51) Int. Cl.³: **F 24 J 3/02**

(54) Vorrichtung zur Nutzung der Erdwärme und Verfahren zur Herstellung dieser Vorrichtung.

(30) Priorität: **23.03.79 DE 2911425**
**04.12.79 DE 2948629**

(73) Patentinhaber: **AEROAQUA AG., Im Thomasgarten 15, CH-4104 Oberwil (CH)**

(72) Erfinder: **Richter, Henning, Dr.-Ing., Brüchauer Berg, D-3134 Bergen/Dumme (DE)**
Erfinder: **Brocks, Klaus, Ing., Wulsdorfer Weg 122 a, D-2070 Ahrensburg (DE)**

(74) Vertreter: **Munk, Ludwig, Dipl.-Ing., Prinzregentenstrasse 1, D-8900 Augsburg (DE)**

(43) Veröffentlichungstag der Anmeldung:
**29.10.80 Patentblatt 80/22**

(45) Bekanntmachung des Hinweises auf die Patenterteilung:
**25.05.83 Patentblatt 83/21**

(84) Benannte Vertragsstaaten:
**AT BE CH DE FR GB IT LU NL SE**

(56) Entgegenhaltungen:
**DE-A-2 418 182**

Vorrichtung zur Nutzung von Erdwärme und Verfahren zur Herstellung dieser Vorrichtung

Die Erfindung betrifft nach einem ersten Erfindungsgedanken eine Vorrichtung zur Nutzung von Erdwärme, insbesondere zum Betrieb einer Wärmepumpe, mit einem säulenartig in das Erdreich hineinragenden Rohrkörper, dessen erdseitiges Ende verschlossen ist und in dessen Innenraum zur Bildung eines Spülmantels ein an seinem unteren Ende mit einem in den Spülmantel mündenden Überlauf versehenes Innenrohr mit einem gegenüber dem Innendurchmesser des Rohrkörpers kleineren Außendurchmesser angeordnet ist, und bezieht sich nach einem weiteren Erfindungsgedanken auf ein Verfahren zur Herstellung dieser Vorrichtung.

Eine Vorrichtung eingangs erwähnter Art ist aus der DE-A-2 418 182 bekannt. Bei der bekannten Anordnung ist der säulenartig in das Erdreich hineinragende Rohrkörper an seinem unteren Ende durch eine an seiner Stirnseite unlösbar festgelegte Platte verschlossen. Zur Aufnahme eines derart verschlossenen Rohrkörpers muß daher zunächst eine Bohrung hergestellt werden, in welche der verschlossene Rohrkörper nachträglich abgesenkt wird. Dies erfordert jedoch eine umständliche und zeitraubende Herstellung. Ein besonderer Nachteil der bekannten Anordnung ist jedoch darin zu sehen, daß hierbei ein zufriedenstellender Erdkontakt des nachträglich in eine Bohrung abzusenkenden Rohrkörpers nicht erreichbar ist, was sich ungünstig auf den Wärmeübergang auswirkt. Die Nachteile der bekannten Anordnung sind daher insbesondere in einer schlechten Wirtschaftlichkeit zu sehen.

Hiervon ausgehend ist es daher die Aufgabe der vorliegenden Erfindung unter Vermeidung der Nachteile der bekannten Anordnungen eine Vorrichtung eingangs erwähnter Art so zu verbessern, daß nicht nur eine einfache Herstellbarkeit, sondern auch ein guter Erdkontakt und damit insgesamt eine hohe Wirtschaftlichkeit gewährleistet sind.

Diese Aufgabe wird erfindungsgemäß dadurch gelöst, daß das erdseitige Ende des vorzugsweise aus mehreren, aneinander festlegbaren Rohrschüssen bestehenden, säulenartig in das Erdreich hineinragenden und beim Bohren als verlorenes Bohrgestänge verwendeten Rohrkörpers mittels eines Kolbens verschließbar ist, der dichtend auf einen in den Rohrkörper eingesetzten, mit einer axialen Bohrung versehenen Sitzkörper aufsetzbar ist.

Diese Maßnahmen eröffnen in vorteilhafter Weise die Möglichkeit, den zunächst unten offenen Rohrkörper als Bohrgestänge und gleichzeitig als Spülleitung zur Spülung der Bohrstelle zu verwenden, was nicht nur die Durchführung einer Spülbohrung erlaubt und damit einen Abtransport von Bohrschutt überflüssig macht, sondern auch einen ausgezeichneten Erdkontakt zwischen dem als Bohrgestänge verwendeten Rohrkörper und dem umgebenden Erdreich gewährleistet. Nach Beendigung der Bohrarbeiten wird der Kolben eingesetzt und damit der Innenraum des Rohrkörpers nach unten verschlossen. Dieser verschlossene Rohrkörper kann somit die Funktion des Außenmantels einer Erdsonde übernehmen. Das unterhalb des dem Kolben zugeordneten Sitzkörpers angeordnete Bohrwerkzeug, beispielsweise ein Rollenmeißel oder dergleichen, gilt hierbei zwar als verloren. Durch die mit den erfindungsgemäßen Maßnahmen erreichte Vereinfachung und Verkürzung der Herstellung sowie Verbesserung des Wärmeschlusses wird dieser Verlust aber weit aufgewogen. Ein weiterer Vorteil der erfindungsgemäßen Maßnahmen besteht darin, daß über den unten offenen Rohrkörper auf einfache Weise eine Bindemittelaufschwemmung, beispielsweise eine Zement- oder vorzugsweise eine Wärmezementaufschwemmung, von unten zwischen die Rohrkörperaußenwand und das diese umgebende Erdreich eingedrückt werden kann, wodurch der Wärmeschluß zwischen dem Rohrkörper und dem diesen umgebenden Erdreich, dem Wärme entzogen werden soll, noch verbessert werden kann. Gleichzeitig ergeben derartige Bindemittel einen ausgezeichneten Korrosionsschutz, was eine lange Lebensdauer gewährleistet. Sofern der Kolben von seinem Sitzkörper abnehmbar ist, besteht in vorteilhafter Weise jederzeit die Möglichkeit, die Bohrung zu vertiefen und damit die Sonde zu verlängern, was in vorteilhafter Weise einen Ausbau Zug um Zug ermöglicht und sich daher positiv auf die Wirtschaftlichkeit auswirkt.

Eine vorteilhafte Weiterbildung der übergeordneten Maßnahmen kann darin bestehen, daß der Kolben einen Führungszylinder und einen in die Bohrung des Sitzkörpers eingreifenden Zapfen aufweist. Der Führungszylinder gewährleistet eine verkantungsfreie Führung des Kolbens im Rohrkörper und damit eine sichere Montage auch in sehr großer Tiefe. Der zweckmäßig hieran angesetzte, in die Bohrung des Sitzkörpers eingreifende Zapfen ermöglicht eine saubere Abdichtung. Zweckmäßig kann der Zapfen mit elastischen Dichtringen versehen sein, die einen sauberen Preßsitz ergeben. Dadurch, daß der Außendurchmesser des Führungszylinders etwas kleiner ist als der Innendurchmesser des in das Erdreich hineinragenden Rohrkörpers, ist sichergestellt, daß beim Absenken des Kolbens im Rohrkörper unterhalb des Kolbens sich befindendes Wasser auf die oberhalb des Kolbens liegende Seite gelangen kann, was ein gedämpftes aber sicheres Niedergehen des Kolbens sicherstellt unter gleichzeitiger Gewährleistung einer ausreichenden Verkantungsfreiheit.

Eine weitere vorteilhafte Maßnahme kann darin bestehen, daß der obere Bereich der Sitzkörperbohrung konisch erweitert ist. Hierdurch ist in vorteilhafter Weise praktisch eine Selbstzentrierung des Kolbens gewährleistet, dessen Zapfen infolge der konischen Erweiterung praktisch selbsttätig in die zugeordnete Bohrung hineinsuchen kann.

Zweckmäßig kann sich an die konische Erweiterung der Sitzkörperbohrung ein dem Führungszylinder zugeordneter zylindrischer Sitz anschließen.

Um ein Abziehen des Kolbens zu ermöglichen, kann der Kolben in weiterer Fortbildung der übergeordneten Maßnahmen im Bereich seiner nach oben weisenden Stirnseite zweckmäßig mit einem Stangen-Verbindungselement, vorzugsweise einfach mit einem zweckmäßig nach oben konisch erweitertem Gewindesackloch versehen sein.

In weiterer Fortbildung der übergeordneten Maßnahmen kann der in das Erdreich hineinragende Rohrkörper im Bereich seines äußeren Umfangs mit umlaufenden, vorzugsweise spiralförmig umlaufenden Rippen versehen sein. Diese Rippen gewährleisten eine große Wärmeübergangsfläche und damit einen ausgezeichneten Wärmefluß, so daß eine ausgezeichnete Wärmeaufnahme zu erwarten ist.

Nach der Lehre des weiteren, ein Verfahren zum Einbringen der erfindungsgemäßen Sonde in das Erdreich betreffenden Erfindungsgedankens soll zweckmäßig zunächst der Rohrkörper mittels eines an seinem unteren Ende befestigten verlorenen Meißels im Wege einer Spülbohrung als verlorenes Bohrgestänge in das Erdreich eingebracht werden, anschließend wird der dem Kolben zugeordnete Sitz des Sitzkörpers mit in den Rohrkörper eingeleitetem Klarwasser freigespült und dann der Kolben unter weiterem Klarwasserzufluß in den Rohrkörper in diesem versenkt. Anschließend wird der Innenraum des Rohrkörpers einfach zumindest so lange unter Druck gesetzt, bis der Wasserabfluß aus dem Rohrkörper stoppt. Hierauf kann das Innenrohr montiert werden. Diese Maßnahmen gewährleisten ersichtlich eine einfache Montage und damit in vorteilhafter Weise kurze Montagezeiten, was sich vorteilhaft auf die Gestehungskosten auswirkt.

Weitere zweckmäßige Ausgestaltungen und vorteilhafte Weiterbildungen der übergeordneten Maßnahmen ergeben sich aus der nachstehenden Beschreibung eines Ausführungsbeispiels anhand der Zeichnung in Verbindung mit den restlichen Unteransprüchen.

Hierbei zeigt

Figur 1 eine schematische Darstellung einer erfindungsgemäßen Sonde in bereits fertiggestelltem Zustand und

Figur 2 einen Schnitt durch ein den dem Kolben zugeordneten Sitzkörper aufnehmendes Rohrstück.

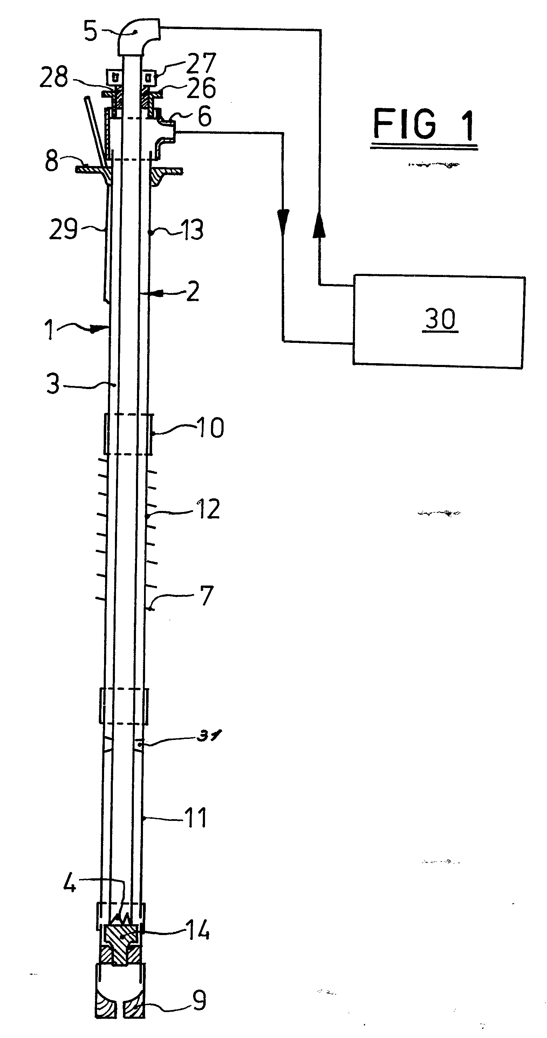

Die in Figur 1 dargestellte Sonde zur Aufnahme von Erdwärme besteht aus einem als Ganzes mit 1 bezeichneten, säulenartig in das Erdreich hineinragenden Rohrkörper mit einem hierin etwa koaxial angeordneten Innenrohr 2. Zwischen dem den Außenmantel der Sonde bildenden Rohrkörper 1 und dem hierin angeordneten, einen gegenüber dem Innendurchmesser des Rohrkörpers 1 kleineren Außendurchmesser aufweisenden Innenrohr 2 ist eine Spülkammer 3 vorgesehen, die über das Innenrohr 2 mit Wärmeaufnahmemedium, in der Regel Wasser, beaufschlagt wird. Hierzu ist im Bereich des unteren Endes des Innenrohrs 2 ein etwa als Wirbelkammer oder dergleichen ausgebildeter Überlauf 4 vorgesehen. Hierzu ist hier einfach das in der Betriebsstellung zweckmäßig am unteren Verschluß des Außenmantels aufsitzende, freie untere Ende des Innenrohres 2 gezahnt. Das obere Ende des Innenrohrs 2 ist mit einem hier durch einen Rohrkrümmer 5 angedeuteten Zulauf versehen. Das obere Ende des den Außenmantel der Sonde bildenden Rohrkörpers 1 weist einen hier als T-Stück 6 ausgebildeten Abfluß auf. Das bei 5 der Sonde zugeleitete Wasser nimmt an den Wandungen der Spülkammer 3 Wärme auf, welche die Sonde dem umliegenden Erdreich entzieht. Zur Verbesserung des Wärmeflusses kann der Rohrkörper 1 mit in das umliegende Erdreich hineinragenden Rippen versehen sein, wie in Figur 1 bis 7 angedeutet ist. Im dargestellten Ausführungsbeispiel handelt es sich vorteilhaft um spiralförmig umlaufende Rippen, die eine Drehbewegung des Rohrkörpers 1 gestatten. Eine oder mehrere, vorzugsweise parallel geschaltete Sonden dieser Art liefern den Bedarf einer Wärmepumpe 30 an Primärenergie. Die Wärmepumpe 30 liegt dabei mit ihrem Heizwasservor- und -rücklauf am T-Stück 6 bzw. am Rohrkrümmer 5.

Der Rohrkörper 1 sitzt mit einem Tragflansch 8 am oberen Rand des zugeordneten Erdlochs auf, das hier als Erdbohrung hergestellt werden soll, die im dargestellten Ausführungsbeispiel mit einem am unteren Ende des Rohrkörpers 1 angebrachten, bei 9 angedeuteten Meißel, der vorteilhaft als Rollenmeißel ausgebildet sein kann, in das Erdreich niedergebracht wird. Während der Bohrarbeiten dient der Rohrkörper 1 als Bohrgestänge. Im dargestellten Ausführungsbeispiel besteht der als Ganzes mit 1 bezeichnete Rohrkörper aus drei mittels jeweils einer bei 10 angedeuteten Muffe aneinander festgelegten Rohrschüssen 11, 12 und 13, die beim Niederbringen der Bohrung stetig aneinander festgelegt werden. Zur Gewährleistung von Spülbohrbetrieb ist der Rohrkörper 1 im Bereich seines erdseitigen Endes zunächst offen und dient somit gleichzeitig als Zuleitung von Spülwasser zur Bohrstelle. Im dargestellten Montagebeispiel ist die erdseitige Öffnung des Rohrkörpers 1 bereits mit einem zugeordneten Kolben 14 verschlossen, so daß kein Verlust von die Sonde durchströmendem Wärmeaufnahmemedium zu befürchten ist.

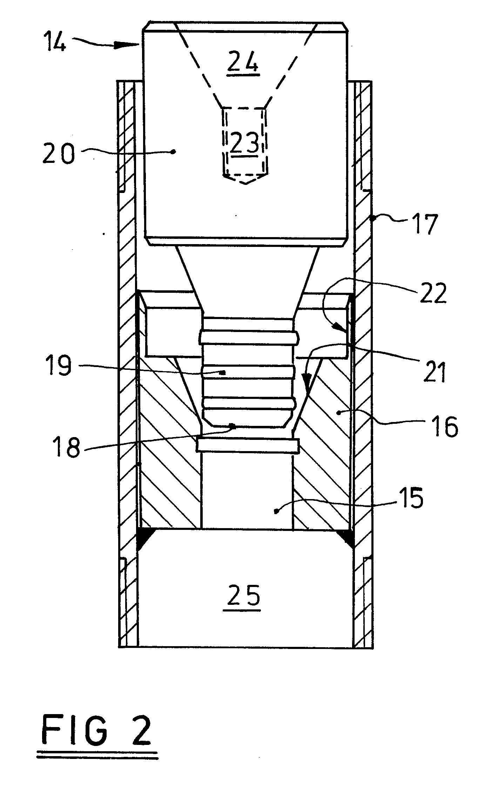

Hierzu ist der Rohrkörper 1, wie am besten aus Figur 2 erkennbar ist, mit einem eine zentrale Axialbohrung 15 aufweisenden Sitzkörper 16 versehen, auf welchen der Kolben 14 aufsetzbar ist. Der Kolben 14 und der Sitzkörper 16 sind als einfache Drehteile ausgeführt. Der Sitzkörper 16 kann einfach in den unteren Rohrschuß 11 eingesetzt sein. Im dargestellten Ausführungsbeispiel findet zur Aufnahme des Sitzkörpers 16 ein im Vergleich zu den Rohrschüssen kurzes Rohrstück 17 Verwendung, das am unteren Rohrschuß 11 festgelegt ist und das zur Aufnahme des Meißels 9 dient, was eine einfache Vorfertigung gewährleistet und die Montage erleichtert. Der Kolben 14 ist mit einem in der Montagestellung in die Bohrung 15 eingreifenden Zapfen 18 versehen. Im dargestellten Ausführungsbeispiel sind im Bereich des Zapfens 18 mehrere elastische Dichtringe 19 angeordnet, die einen exakten Dichtsitz gewährleisten.

Der Kolben 14 wird einfach im Rohrkörper 1 bis zum Sitzkörper 16 abgelassen. In Figur 2 ist die Stellung kurz vor Erreichen des Sitzkörpers 16 festgehalten. Zur Gewährleistung einer verkantungsfreien Führung des Kolbens 14 im Rohrkörper 1 ist der Kolben 14 mit einem Führungszylinder 20 versehen, an welchen der Zapfen 18 angesetzt ist. Der Durchmesser des Führungszylinders 20 ist etwas kleiner als der Innendurchmesser der Rohrschüsse 11 bis 13 bzw. des denselben Durchmesser aufweisenden Rohrstücks 17, so daß bei ausreichender Führung ein zuverlässiges Niedergehen des Kolbens 14 in dem mit Wasser gefüllten Rohrkörper 1 gewährleistet ist. Die Sitzkörperbohrung 15 ist im Bereich ihres oberen Endes mit einer konischen Erweiterung 21 versehen, wodurch der Zapfen 18 des Kolbens 14 praktisch selbsttätig in die zugeordnete Bohrung 15 hineingeführt wird. Oberhalb der konischen Erweiterung 21 weist der Sitzkörper 16 einen dem Führungszylinder 20 zugeordneten, zylindrischen Sitz 22 auf. Der Übergangsbereich zwischen Führungszylinder 20 und Zapfen 18 kann ebenfalls konisch ausgebildet sein. Um den Kolben 14 mit Hilfe einer geeigneten Stange wieder von seinem Sitz abheben zu können, ist im Bereich der nach oben weisenden Kolbenstirnseite ein geeignetes Stangen-Verbindungselement, im dargestellten Ausführungsbeispiel einfach eine Gewindesackbohrung 23 vorgesehen, die zweckmäßig nach oben konisch erweitert ist, wie bei 24 angedeutet ist.

Der hier in das Rohrstück 17 einfach eingeschweißte Sitzkörper 16 ist zweckmäßig so angeordnet, daß sich unterhalb seiner unteren Stirnseite ein in Figur 2 bei 25 angedeuteter Freiraum ergibt. Die Höhe dieses Freiraums 25 kann in etwa dem Rohrdurchmesser entsprechen. Durch diese Maßnahme ist sichergestellt, daß unterhalb des Sitzkörpers 16 ausreichend Platz vorhanden ist, in welchem Steine oder dergleichen, welche nicht ausgespült wurden, liegenbleiben können, ohne die Bohrung 15 für den zugeordneten Zapfen 18 zu blockieren.

Beim Einbringen der vorstehend beschriebenen Sonde in das Erdreich wird zweckmäßig so vorgegangen, daß zunächst das den Sitzkörper 16 aufweisende Rohrstück 17 am ersten Schuß 11 festgelegt wird. Anschließend wird der Meißel 9 auf das freie Ende des Rohrstücks 17 aufmontiert. Die derart vorbereitete Einheit wird in einen Bohrwagen eingesetzt und im Spülbohrbetrieb, d. h. unter ständiger Druckwasserzufuhr zum Meißel 9 über den Innenraum des Rohrkörpers 1 niedergebracht, wobei der Rohrkörper 1 nach Erreichen der entsprechenden Tiefe durch Aufsetzen jeweils eines weiteren Schusses 12 bzw. 13 verlängert wird, bis die endgültige Tiefe erreicht ist. Nach Aufsetzen des Tragflansches 8 auf den Rand der Bohrung wird der Innenraum des Rohrkörpers 1 durch Zufuhr von Klarwasser eine ausreichende Zeit, etwa 5 Minuten, gespült. Anschließend kann sofort der Kolben 14 abgesenkt werden. Diesen läßt man einfach unter der Wirkung seines eigenen Gewichts im Rohrkörper 1 absinken, wobei währenddessen laufend Klarwasser nachgeführt wird, so daß die unter dem Kolben 14 sich befindende Wassersäule eine Abbremsung bewirkt und der Kolben 14 somit gedämpft auf den zugeordneten Sitzkörper 16 aufsetzt. Durch entsprechende Wahl des Durchmesserunterschieds zwischen dem Innendurchmesser des Rohrkörpers 1 und dem Außendurchmesser des Führungszylinders 20 läßt sich die Sinkgeschwindigkeit auf das gewünschte Maß bringen. Sobald der Kolben 14 abgesenkt ist, wird der Innenraum des Rohrkörpers 1 unter Druck gesetzt, etwa durch entsprechende Druckwasserzufuhr. Sobald der Wasserabfluß über die Bohrung 15 aus dem Innenraum des Rohrkörpers 1 stoppt, ist dies ein Zeichen dafür, daß der Zapfen 18 die Bohrung 15 verschlossen und der Kolben 14 unter der Wirkung des an ihm angreifenden Drucks seinen Sitz erreicht hat. Anschließend kann daher der zur Druckbeaufschlagung an seinem oberen Ende abgedeckelte Rohrkörper 1 geöffnet und das Innenrohr 2 montiert werden. Dieses wird einfach in den durch den Rohrkörper 1 gebildeten Außenmantel eingesteckt, bis es mit seinem unteren, gezackten Ende auf dem Kolben 14 aufsitzt. Zur Halterung und Zentrierung des oberen Endes des Innenrohres können das Außenrohr und das Innenrohr mit vorzugsweise unter Zwischenschaltung eines Dichtrings aufeinander aufsetzbaren und zusammenspannbaren Flanschen versehen sein. Im dargestellten Ausführungsbeispiel ist hierzu ein in das T-Stück 6 eingeschraubtes Reduzierstück 26 vorgesehen, in das eine mittels einer Schelle 27 oder dergleichen auf dem Innenrohr festgelegte Dichtmuffe 28 etwa in Form eines Schlauchnippels eingreift. Hiermit ist der Vorteil verbunden, daß durch Wärmedehnungen bzw. -schrumpfungen hervorgerufene Relativbewegungen zwischen Außenrohr 1 und Innenrohr 2 ohne weiteres möglich sind. Die Dichtmuffe 28 kann dabei vorteilhaft noch so ausgebildet sein, daß sich die Spülkammer 3 nach außen entlüften kann. Zur Erhöhung der Verweilzeit des den Spülmantel 3 durchströmenden Wärmeaufnehmemediums kann das Innenrohr 2 mit einem oder mehreren an seinem Umfang angebrachten Leitschaufelkränzen der in Figur 1 bei 31 angedeuteten Art versehen sein. Diese dienen in vorteilhafter Weise gleichzeitig zur Bewerkstelligung einer ausreichenden Zentrierung des Innenrohrs 2 im Rohrkörper 1.

Zur Erhöhung des Wärmeschlusses zwischen dem Rohrkörper 1 und dem diesen umgebenden Erdreich kann vorteilhaft ein geeignetes Bindemittel Verwendung finden. Dieses wird zweckmäßig in Form einer Aufschwemmung vor der Montage des Kolbens 14 über den freien Innenraum des Rohrkörpers 1 und die offene Bohrung 14 von unten in den Zwischenraum zwischen dem äußeren Umfang des Rohrkörpers 1 und dem umgebenden Erdreich eingedrückt. Zweckmäßig wird hierzu der Rohrkörper 1 einfach so lange unter Druck mit der Bindemittel-Aufschwemmung beaufschlagt, bis im Bereich des Tragflansches 8 Bindemittel austritt. Anschließend wird das im Rohrkörper 1 sich befindende Bindemittel durch Zufuhr von Klarwasser über die Bohrung 14 nach unten ausgespült. Anschließend wird der Kolben 14 montiert, wie weiter oben bereits beschrieben. Das zur Verbesserung des Wärmeschlusses verwendete Bindemittel ergibt gleichzeitig in vorteilhafter Weise einen ausgezeichneten Korrosionsschutz der Oberflächen des Rohrkörpers 1, womit eine lange Lebensdauer gewährleistet ist. Als Bindemittel kann zweckmäßig Zement, vorzugsweise sogenannter Wärmezement, Verwendung finden. Um eine unkontrollierte Vereisung der Sondenaußenwandung etwa im Falle von Grenzbelastungen zu vermeiden, kann ein die Vereisung verzögerndes Mittel, etwa eine hinsichtlich einer Gefährdung des Grundwassers unbedenkliche Lösung in das Erdreich eingegeben werden. Hierzu können am Außenumfang des Rohrkörpers 1 angeordnete, bis zum gefährdeten Bereich reichende Impfrohre 29 vorgesehen sein.

Vorstehend ist zwar ein besonders bevorzugtes Ausführungsbeispiel näher beschrieben, ohne daß jedoch hiermit eine Beschränkung verbunden sein soll.

**Patentansprüche**

1. Vorrichtung zur Nutzung von Erdwärme, insbesondere zum Betrieb einer Wärmepumpe (30), mit einem säulenartig in das Erdreich hineinragenden Rohrkörper (1), dessen erdseitiges Ende verschlossen ist und in dessen Innenraum zur Bildung eines Spülmantels (3) ein an seinem unteren Ende mit einem in den Spülmantel (3) mündenden Überlauf (4) versehenes Innenrohr (2) mit einem gegenüber dem Innendurchmesser des Rohrkörpers (1) kleineren Außendurchmesser angeordnet ist, dadurch gekennzeichnet, daß das erdseitige Ende des vorzugsweise aus mehreren, aneinander festlegbaren Rohrschüssen (11, 12, 13) bestehenden, säulenartig in das Erdreich hineinragenden und beim Bohren als verlorenes Bohrgestänge verwendeten Rohrkörpers (1) mittels eines Kolbens (14) verschließbar ist, der dichtend auf einen in den Rohrkörper (1) eingesetzten, mit einer axialen Bohrung (15) versehenen Sitzkörper (16) aufsetzbar ist.

2. Vorrichtung nach Anspruch 1, dadurch gekennzeichnet, daß das Innenrohr (2) mit seinem unteren Ende auf dem erdseitigen Verschluß des Rohrkörpers (1) aufsitzt und im Bereich seines oberen Endes vorzugsweise mittels einer Bewegungsdichtung (28) gegenüber dem Rohrkörper (1) abgedichtet ist.

3. Vorrichtung nach wenigstens einem der vorhergehenden Ansprüche, dadurch gekennzeichnet, daß im Bereich des Überlaufs (4) vom Innenrohr (2) zum Spülmantel (3) eine vorzugsweise als gezackter Rand des Innenrohrs (2) ausgebildete Wirbeleinrichtung vorgesehen ist.

4. Vorrichtung nach wenigstens einem der vorhergehenden Ansprüche, dadurch gekennzeichnet, daß das Innenrohr (2) im Bereich seines Außenumfangs in den Spülmantel (3) hineinragende Leitschaufelkränze (31) aufweist.

5. Vorrichtung nach wenigstens einem der vorhergehenden Ansprüche, dadurch gekennzeichnet, daß der Kolben (14) vom zugeordneten Sitzkörper (16) abnehmbar ist.

6. Vorrichtung nach wenigstens einem der vorhergehenden Ansprüche, dadurch gekennzeichnet, daß der Kolben (14) einen Führungszylinder (20), dessen Durchmesser vorzugsweise etwas kleiner als der Innendurchmesser des Rohrkörpers (1) ist, und einen in die Bohrung (15) des Sitzkörpers (16) eingreifenden Zapfen (18) aufweist, der vorzugsweise mit mindestens einem elastischen Dichtring (19) versehen ist.

7. Vorrichtung nach Anspruch 6, dadurch gekennzeichnet, daß der obere Bereich der Sitzkörperbohrung (15) eine konische Erweiterung (21) aufweist, an die sich vorzugsweise ein dem Führungszylinder (20) zugeordneter zylindrischer Sitz (22) anschließt.

8. Vorrichtung nach wenigstens einem der vorhergehenden Ansprüche 5 bis 7, dadurch gekennzeichnet, daß der Kolben (14) im Bereich seiner nach oben weisenden Stirnseite mit einem vorzugsweise als nach oben konisch erweitertes Gewindesackloch ausgebildeten Stangen-Verbindungselement (23) versehen ist.

9. Vorrichtung nach wenigstens einem der vorhergehenden Ansprüche 5 bis 8, dadurch gekennzeichnet, daß zur Aufnahme des Sitzkörpers (16) ein am ersten Schuß (11) des Rohrkörpers (1) festlegbares Rohrstück (17) vorgesehen ist, an dessen freiem Ende ein Meißel (9), vorzugsweise ein Bohrmeißel, festlegbar ist.

10. Vorrichtung nach wenigstens einem der vorhergehenden Ansprüche 5 bis 9, dadurch gekennzeichnet, daß unterhalb des Sitzkörpers (16) ein Freiraum (25) von etwa dem Rohrdurchmesser entsprechender Höhe vorgesehen ist.

11. Vorrichtung nach wenigstens einem der vorhergehenden Ansprüche, dadurch gekennzeichnet, daß der Rohrkörper (1) im Bereich seines äußeren Umfangs mit umlaufenden, vorzugsweise spiralförmig umlaufenden Rippen (7) versehen ist.

12. Vorrichtung nach wenigstens einem der vorhergehenden Ansprüche, dadurch gekennzeichnet, daß am Außenumfang des Rohrkörpers (1) mindestens ein bis zum vereisungsgefährdeten Bereich führendes Impfrohr (29) zum Einbringen eines vereisungsverzögernden Mittels vorgesehen ist.

13. Verfahren zum Herstellen einer Vorrichtung nach wenigstens einem der vorhergehenden Ansprüche, dadurch gekennzeichnet, daß zunächst der Rohrkörper (1) mittels eines an seinem unteren Ende befestigten, verlorenen Bohrmeißels (9) im Wege einer Spülbohrung als verlorenes Bohrgestänge in das Erdreich eingebracht wird, daß dann der dem Kolben (14) zugeordnete Sitz des Sitzkörpers (16) mit in den Rohrkörper (1) eingeleitetem Klarwasser freigespült und anschließend der Kolben (14) unter weiterem Klarwasserzufluß im Rohrkörper (1) versenkt wird, worauf der Innenraum des Rohrkörpers (1) zumindest so lange unter Druck gesetzt wird, bis der Wasserabfluß aus dem Rohrkörper (1) stoppt, und daß daraufhin das Innenrohr (2) in den Rohrkörper (1) abgesenkt wird, bis es mit seinem unteren Ende auf dem erdseitigen Verschluß des Rohrkörpers (1) aufsteht.

14. Verfahren nach Anspruch 13, dadurch gekennzeichnet, daß der Innenraum des Rohrkörpers (1) nach Beendigung der Bohrung und vor Montage des erdseitigen Verschlusses unter Druck mit einer Bindemittel-Aufschwemmung beaufschlagt wird, bis diese am oberen Bohrungsgrad außerhalb des Rohrkörpers (1) auftritt.

15. Verfahren nach Anspruch 14, dadurch gekennzeichnet, daß als Bindemittel Zement, vorzugsweise Wärmezement, Verwendung findet.

## Claims

1. An apparatus for making use of the heat of the earth, more specially for running a heat pump (30), with a column-like tube body (1) let into the earth, whose lower end is shut off and which has within its inside space, for forming a flushing jacket (3), an inner tube (2) having at a lower end thereof an overflow (4) opening into the flushing jacket (3), said inner tube (2) having an outer diameter that is smaller than the inner diameter of the tube body (1), characterized in that the lower end of the tube body (1), that is more specially made up of a number of separate lengths of tube (11, 12, 13) that may be fixed together to make up the column-like tube body (1) let into the earth and used as a lost drill column, may be shut off by a piston (14), that may be placed fluid-tightly on a seat body (16), that is placed in the tube body (1) and has an axial hole (15).

2. An apparatus as claimed in claim 1, characterized in that the inner tube (2) has its lower end seated on the lower end closure of the tube body (1) and has a seal between its top end and the tube body (1), such seal being more specially in the form of gland (28).

3. An apparatus as claimed in at least one of claims 1 and 2, characterized in that at the overflow (4) from the inner tube (2) into the flushing jacket (3) there is a swirling part that is more specially in the form of a toothed edge on the inner tube (2).

4. An apparatus as claimed in at least one of claims 1 to 3, characterized in that on its outer face the inner tube (2) has rings (31) of guide blades running out into the flushing jacket.

5. An apparatus as claimed in at least one of claims 1 to 4, characterized in that the piston (14) may be moved clear of the seat body (16) used therewith.

6. An Apparatus as claimed in at least one of claims 1 to 5, characterized in that the piston (14) has a guide cylinder (20), whose diameter is best made somewhat smaller than the inner diameter of the tube body (1), and a pin (18) let into the hole (15) of the seat body (16), the pin (18) preferably having at least one elastic sealing ring (19).

7. An apparatus as claimed in claim 6, characterized in that the top part of the hole (15) in the seat body has a coned part (21) becoming wider and which is next to a cylindrical seat (22) that is preferably on the guide cylinder (20).

8. An apparatus as claimed in at least one of claims 5 to 7, characterized in that the piston (14) has, at its upwardly turned end face, a bar connection element (23), that is more specially designed in the form of a blind threaded hole becoming wider like a cone in an upward direction.

9. An apparatus as claimed in at least one of claims 1 to 8, characterized in that to take up the seat body (16) there is a piece of tube (17), designed to be fixed to the first length (11) of the tube body (1), and a cutting tool (9), more specially a drilling tool, may be fixed thereto.

10. An apparatus as claimed in at least one of claims 5 to 9, characterized in that the under the seat body (16) there is a free space (25) having a height generally equal to the tube diameter.

11. An apparatus as claimed in at least one of claims to 10, characterized in that the tube body (1) has fins (7) running round its outer face, more specially spirally.

12. An apparatus as claimed in at least one of claims 1 to 11, characterized in that on the outer face of the tube body (1) there is at least one seeding tube (29), running as far as the part where there is a danger of icing, for running in a material delaying icing.

13. A process of producing an apparatus as claimed in at least one of claims 1 to 12, characterized in that first the tube body (1) is let into the earth by using as a lost drill tool (9) fixed to its lower end, by flush boring as a lost drilling column, in that the seat, designed for use with the piston (14), of the seat body (16) is flushed out with swilling water run into the tube body (1) and then the piston (14) is lowered with the input of further swilling water in the tube body (1), whereupon the inside space of the tube body (1) is put under pressure at least till water has stopped coming out of the tube body (1) and nextly the inner tube (1) is lowered down into the tube body (1) till its lower end is resting on the end closure of the tube body (1).

14. A process as claimed in claim 13, characterized in that the inside space of the tube body (1) is filled, at the end of drilling but before putting the lower closure in position, under pressure with a suspension of a binder till the same comes out at the top edge of the drill hole outside the tube body (1).

15. A process as claimed in claim 14, characterized in that the binder used is cement, and more specially thermal cement.

## Revendications

1. Installation pour l'exploitation de l'énergie géothermique, destinée, en particulier, à l'alimentation d'une pompe à chaleur (30), comportant un corps tubulaire (1) enfoncé dans le sol à la manière d'une colonne de sondage, dont l'extrémité inférieure située dans le sol est fermée et qui contient, dans le but de former une chemise de rinçage (3), un tube intérieur (2) muni à son extrémité inférieure d'une ouverture de sortie (4) débouchant dans la chemise de rinçage (3), tube intérieur dont le diamètre extérieur est plus petit que le diamètre intérieur dudit corps tubulaire (1), caractérisée en ce que l'extrémité inférieure dudit corps tubulaire (1), composé de préférence d'une pluralité de tubes (11, 12, 13) fixés les uns aux autres et introduit dans le sol en guise de colonne de sondage perdue, peut être fermée au moyen d'un clapet (14), susceptible de s'appliquer de manière étanche sur un corps à siège (16) muni d'un alésage axial (15) et monté à l'intérieur du corps tubulaire (1).

2. Installation selon la revendication 1, caractérisée en ce que ledit tube intérieur (2) repose avec son extrémité inférieure sur le dispositif de fermeture de l'extrémité inférieure, située dans la terre, dudit corps tubulaire (1) et est, au niveau de son extrémité supérieure, obturé de manière étanche par rapport au corps tubulaire (1) de préférence au moyen d'un dispositif d'étanchéité élastique susceptible de compenser les mouvements relatifs qu'exécutent le tube intérieur et le corps tubulaire l'un par rapport à l'autre.

3. Installation selon l'une au moins des revendications précédentes, caractérisée en ce qu'au niveau de ladite ouverture de sortie (4) du tube intérieur (2), qui débouche dans la chemise de rinçage (3), est prévu un dispositif générateur de tourbillons se présentant de préférence sous forme de bord denté du tube intérieur (2).

4. Installation selon l'une au moins des revendications précédentes, caractérisée en ce que ledit tube intérieur (2) est muni de couronnes d'ailettes périphériques extérieures (31) servant d'éléments de guidage et pénétrant dans ladite chemise de rinçage (3).

5. Installation selon l'une au moins des revendications précédentes, caractérisée en ce que ledit clapet (14) peut être soulevé du corps à siège (16) correspondant.

6. Installation selon l'une au moins des revendications précédentes, caractérisée en ce que ledit clapet (14) est muni d'un cylindre de guidage (20), dont le diamètre est de préférence un peu plus petit que le diamètre intérieur du corps tubulaire (1), et présente un tenon (18) qui prend dans ledit alésage (15) dudit corps à siège (16) et qui de préférence est muni d'une bague d'étanchéité élastique (19).

7. Installation selon la revendication 6, caractérisée en ce que la partie supérieure de l'alésage (15) du corps à siège (16) présente un évasement conique (21), auquel se raccorde de préférence un siège cylindrique (22) coopérant avec ledit cylindre de guidage (20).

8. Installation selon l'une au moins des revendications précédentes 5−7, caractérisée en ce que ledit clapet (14) est, au niveau de sa face supérieure regardant vers le haut, muni d'un dispositif pour la fixation d'une tringle, se présentant de préférence sous forme d'un trou borgne taraudé (23) s'évasant vers le haut à la manière d'une surface conique.

9. Installation selon l'une au moins des revendications précédentes 5−8, caractérisée en ce qu'est prévu un bout de tube (17) servant de logement pour ledit corps à siège (16), susceptible d'être fixé au premier tube (11) du corps tubulaire (1) et portant à son extrémité libre inférieure un trépan (9), de préférence un trépan de forage.

10. Installation selon l'une au moins des revendications précédentes 5−9, caractérisée en ce qu'en dessous dudit corps à siège (16) est prévu un espace libre (25) de forme cylindrique, dont le diamètre correspond à peu près à sa hauteur.

11. Installation selon l'une au moins des revendications précédentes, caractérisée en ce que la surface extérieure dudit corps tubulaire (1) est munie de nervures périphériques (7) de préférence spiralées.

12. Installation selon l'une au moins des revendications précédentes, caractérisée en ce que ledit corps tubulaire (1) porte à sa surface extérieure au moins un tube d'injection d'un antigel (29) s'étendant jusqu'au niveau où la sonde risque d'être bloquée par le gel.

13. Procédé de montage d'une installation selon l'une au moins des revendications précédentes, caractérisée en ce que ledit corps tubulaire (1) est d'abord introduit dans le sol comme tube de forage perdu par forage avec circulation, effectué au moyen d'un trépan perdu (9) fixé à son extrémité inférieure, le siège dudit corps à siège destiné à porter ledit clapet (14) est ensuite soigneusement rincé avec de l'eau claire injectée dans le tube, et ledit clapet (14) est alors descendu dans le corps tubulaire (1) tout en poursuivant l'amenée d'eau claire, aprés quoi l'espace intérieur du corps tubulaire (1) est maintenu sous pression au moins jusqu'au moment où l'eau commence à l'écouler du corps tubulaire (1), ledit tube intérieur (2) étant finalement descendu dans le corps tubulaire jusqu'à ce qu'il repose avec son extrémité inférieure sur le dispositif de fermeture du corps tubulaire.

14. Procédé selon la revendication 13, caractérisée en ce que l'espace intérieur du corps tubulaire (1) est, après le forage et avant la fermeture de l'extrémité inférieure de ce dernier, mis sous pression au moyen d'un liant approprié en suspension, et maintenu sous pression jusqu'à ce que la suspension sort du corps tubulaire au niveau du bord supérieur du trou de forage.

15. Procédé selon la revendication 14, caractérisée en ce que ledit liant est du ciment et de préférence un thermociment.

**0 017 783**

**FIG 1**

30

## FIG 2